# EUROPEAN PATENT APPLICATION

(11) **EP 2 746 902 A1**
(43) Date of publication of application: **25.06.2014**
(21) Application number: 12008546.9
(22) Date of filing: 21.12.2012
(51) Int. Cl.: G06F 3/041

(54) **Touch-sensitive device and touch-sensitive display device**

(71) Applicant: Wintek Corporation, 42760 Taichung City (TW)
(72) Inventor: Chen, Chia-Chi, Tai Chung County (TW); Chang, Hui-Jou, Tai Chung City (TW); Huang, Shin-Chieh, Tai Chung City (TW); WU, Ming-Kung, Tai Chung City (TW)
(74) Representative: Becker Kurig Straus

(57) **Abstract**

A touch-sensitive device includes a transparent substrate, a touch-sensing structure, a trace layer, a medium layer and an electrode protection layer. The touch-sensing structure is disposed on the transparent substrate, the trace layer is disposed on the transparent substrate and connected with the touch-sensing structure, and the medium layer is disposed on the transparent substrate and substantially covering the trace layer. The electrode protection layer is disposed on the medium layer and overlaps at least part of the trace layer.

## Description

### BACKGROUND OF THE INVENTION

### a. Field of the Invention

The invention relates to a touch-sensitive device and a touch-sensitive display device.

### b. Description of the Related Art

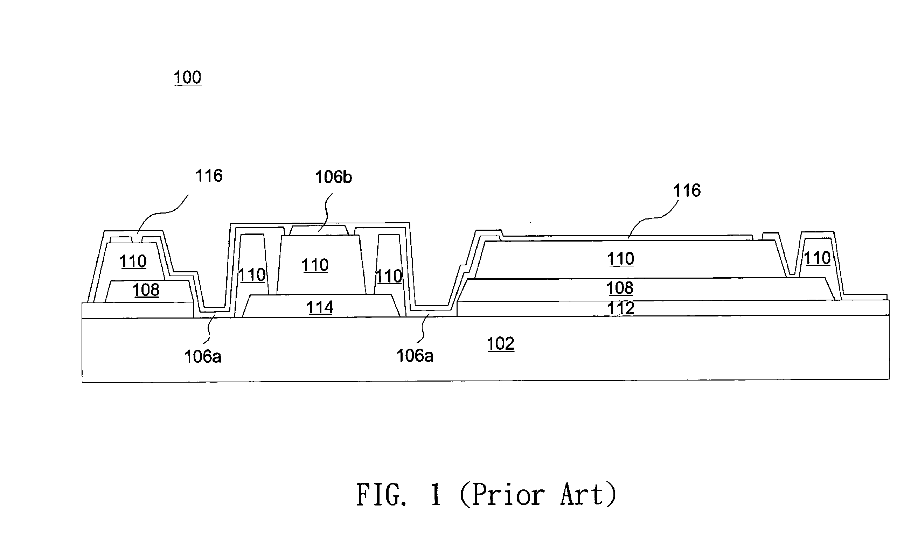

Referring to FIG. 1, a conventional touch-sensitive device 100 has a glass substrate 102, multiple touch-sensing electrodes (such as X-axis electrodes 106a and Y-axis electrodes 106b), a trace layer 108, an organic insulation layer 110 and a decorative layer 112. The X-axis electrodes 106a and the Y-axis electrodes 106b may be arranged in two directions perpendicular to each other. The X-axis electrodes 106a and the Y-axis electrodes 106b are insulated from each other by the organic insulation layer 110, two adjacent X-axis electrodes 106a are connected with each other by a connecting wire 114, and two adjacent Y-axis electrodes 106b are connected with each other by another connecting wire (not shown). The trace layer 108 includes multiple metal traces, and a silicide layer 116 entirely covers the X-axis electrodes 106a, the Y-axis electrodes 106b and the metal trace layer 108 to function as a passivation layer. Typically, the trace layer 108 is covered by the organic insulation layer 110 that serves as a protection layer to protect metal traces. However, in the fabrication of the touch-sensitive device 100, particularly in an etching process of patterning the X-axis electrodes 106a and the Y-axis electrodes 106b, an etchant may cause the organic insulation layer 110 to form pinholes, and therefore the etchant such as aqua regia may etch the trace layer 108 via the pinholes to result in a broken circuit, thus decreasing the yield and reliability of a finished product.

### BRIEF SUMMARY OF THE INVENTION

The invention provides a touch-sensitive device and a touch-sensitive display device having improved production yield and reliability.

Other objects and advantages of the invention can be better understood from the technical characteristics disclosed by the invention. In order to achieve one of the above purposes, all the purposes, or other purposes, one embodiment of the invention provides a touch-sensitive device including a transparent substrate, a touch-sensing structure, a trace layer, a medium layer and an electrode protection layer. The touch-sensing structure is disposed on the transparent substrate, the trace layer is disposed on the transparent substrate and connected with the touch-sensing structure, and the medium layer is disposed on the transparent substrate and substantially covering the trace layer. The electrode protection layer is disposed on the medium layer and overlaps at least part of the trace layer.

In one embodiment, the touch-sensing structure includes a plurality of first sensing series and a plurality of second sensing series, the medium layer is a dielectric layer, and the first sensing series and the second sensing series are spaced apart from each other by the dielectric layer.

In one embodiment, a top insulation layer is disposed on the electrode protection layer and the dielectric layer and substantially overlaps at least part of the touch-sensing structure and the trace layer.

In one embodiment, the dielectric layer has an opening formed on the trace layer to expose part of the trace layer.

In one embodiment, the medium layer is a passivation layer covering the touch-sensing structure, and a top insulation layer is disposed on the electrode protection layer and the passivation layer and substantially overlaps at least part of the touch-sensing structure and the trace layer.

In one embodiment, a decorative layer is disposed on the transparent substrate, and the trace layer is disposed on the decorative layer. The decorative layer may include at least one of diamond-like carbon, ceramic, colored ink, resin and photo resist.

In one embodiment, a bottom insulation layer is formed on the transparent substrate, and the touch-sensing structure and the trace layer are formed on the bottom insulation layer.

In one embodiment, a transparent conductive layer is formed on the transparent substrate and electrically connected with a trace layer and an external circuit, and a shielding layer is formed on one side of the transparent substrate opposite the trace layer.

In one embodiment, each of the first sensing series comprises a plurality of first transparent electrodes and first connecting lines, each of the second sensing series comprises a plurality of second transparent electrodes and second connecting lines, the first transparent electrodes are connected with each other by the first connecting lines, and the second transparent electrodes are connected with each other by the second connecting lines. The electrode protection layer, the first transparent electrodes and the second transparent electrodes may be formed in the same fabrication process with an identical material.

According to another embodiments of the invention, the afore-mentioned touch-sensitive device may combine with a display device to form a touch-sensitive display device by an optical adhesive. The touch-sensitive display device may be an organic light-emitting diode display, an electro-wetting display, a bi-stable display, or an electrophoretic display.

According to the above embodiments, the electrode protection layer is disposed on the dielectric layer and substantially covers the trace layer to provide protection for the dielectric layer and the trace layer against possible damages as a result of an etchant, a foreign body or external forces. Accordingly, the yield and reliability of a finished product are increased. Besides, the electrode protection layer, the first transparent electrodes and the second transparent electrodes may be formed in the same fabrication process with an identical material (such as ITO) to prevent additional fabrication processes and reduce fabrication costs.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

FIG. 1 shows a schematic diagram of a conventional touch-sensitive device.

FIG. 2 shows a plan view of a touch-sensitive device according to an embodiment of the invention, and FIG. 3 shows an enlarged cross-section of FIG. 2.

FIG. 4 shows a schematic diagram of a touch-sensitive device according to another embodiment of the invention.

FIG. 5 shows a schematic diagram of a touch-sensitive device according to another embodiment of the invention.

FIG. 6A shows a schematic diagram of a touch-sensitive device according to another embodiment of the invention.

FIG. 6B shows a schematic diagram of a touch-sensitive device according to another embodiment of the invention.

FIG. 7 shows a schematic diagram of a touch-sensitive display device according to an embodiment of the invention.

### DETAILED DESCRIPTION OF THE INVENTION

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

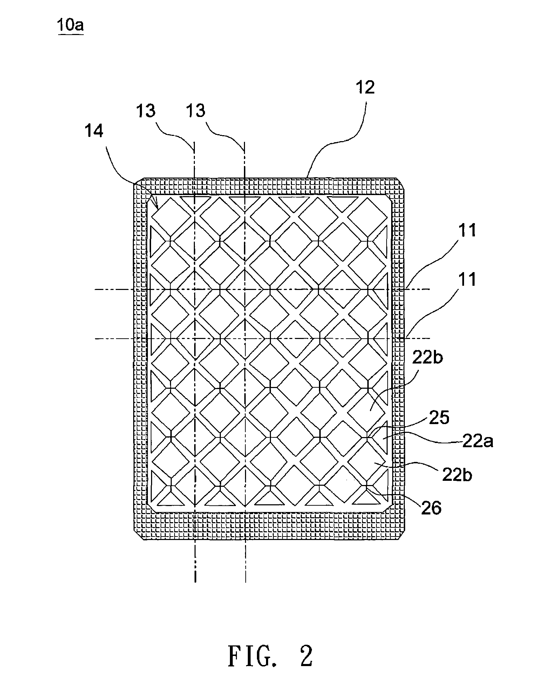

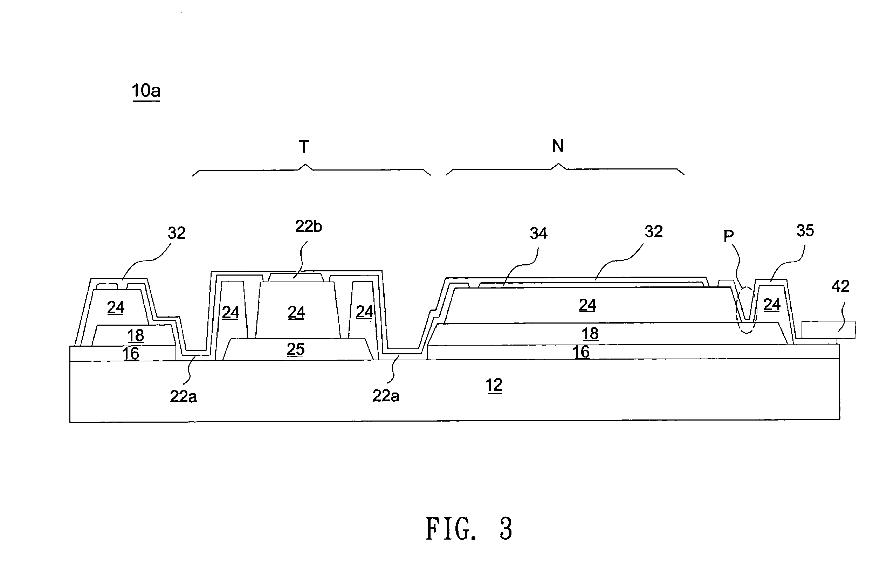

FIG. 2 shows a plan view of a touch-sensitive device according to an embodiment of the invention. FIG. 3 shows an enlarged cross-section of FIG. 2. Please refer to both FIG. 2 and FIG. 3, a touch-sensitive device 10a includes a transparent substrate 12 and a laminated structure formed on the transparent substrate 12. The touch-sensitive device 10a may have a touch screen area T and a non-screen area N. In this embodiment, the non-screen area N is disposed on a periphery of the touch-sensitive device 10a and may surround the touch screen area T. A touch-sensing structure 14 may be provided substantially in the touch screen area T to detect touch actions. In the laminated structure substantially provided in the non-screen area N, a decorative layer 16 is disposed on the transparent substrate 12, and a trace layer 18 is disposed on the decorative layer 16. The trace layer 18 may include multiple metal traces, and the touch-sensing structure 14 is electrically connected with the metal traces. The transparent substrate 12 may be, but is not limited to, a glass substrate or a plastic substrate. The decorative layer 16 is formed on a periphery of the transparent substrate 12 to shield metal traces, and the decorative layer 16 may include at least one of diamond-like carbon, ceramic, colored ink, resin and photo resist. The touch-sensing structure 14 in the touch screen area T may be a single-layer electrode structure or a multi-layer electrode structure. The touch-sensing structure 14 may include a plurality of first sensing series 11 and a plurality of second sensing series 13, and the second sensing series 13 are spaced apart from the first sensing series 11 by a dielectric layer 24. In this embodiment, the dielectric layer 24 is disposed on the transparent substrate 12 and substantially covers the trace layer 18. Each first sensing series 11 includes multiple first transparent electrodes 22a connected with each other by multiple first connecting lines 25, each second sensing series 13 includes multiple second transparent electrodes 22b connected with each other by multiple second connecting lines 26, and the dielectric layer 24 is disposed between a first connecting line 25 and a corresponding second connecting line 26. Note the type of the touch-sensing structure 14 is not limited and is exemplified by the above embodiments. Further, the touch-sensing structure 14 may be disposed on two opposite sides of the transparent substrate 12, and the transparent electrodes 22a and 22b may have a regular shape such as a diamond, a triangle or a line segment or may have an irregular shape.

As shown in FIG. 3, a passivation layer 32 covers both a touch-sensing structure in the touch screen area T and a laminated structure in the non-screen area N to protect an entire structure of the touch-sensitive device 10a. The passivation layer 32 may be made of an inorganic material such as silicide. In this embodiment, an electrode protection layer 34 is interposed between the passivation layer 32 and the dielectric layer 24, and the electrode protection layer 34 on the dielectric layer 24 may overlap the trace layer 18. In conventional designs, during an etching process of patterning transparent electrodes 22a and 22b, an etchant may cause the dielectric layer 24 to form pinholes, and therefore the etchant such as aqua regia may etch the trace layer 18 via the pinholes to result in a broken circuit. According to this embodiment, the electrode protection layer 34 is disposed on the dielectric layer 24 and substantially covers the trace layer 18 to provide protection for the dielectric layer 24 and the trace layer 18 against possible damages as a result of an etchant, a foreign body or external forces. Accordingly, the yield and reliability of a finished product are increased. Besides, the electrode protection layer 34, the first transparent electrodes 22a and the second transparent electrodes 22b may be formed in the same fabrication process with an identical material (such as ITO) to prevent additional fabrication processes and reduced fabrication costs.

Further, at least one opening P is formed on the dielectric layer 24 to expose part of the trace layer 18. The exposed part of the trace layer 18 is connected to a transparent conductive layer 35 formed on a side edge of the transparent substrate 12, and one end of the transparent conductive layer 35 is connected to a flexible circuit board 42 to electrically connect the trace layer 18 with an external circuit such as the flexible circuit board 42. In this embodiment, since the electrode protection layer 34 does not serve the purpose of electrical conduction, two ends of the electrode protection layer 34 do not connected with the wiring of the touch-sensing structure 14. For example, as shown in FIG. 3, the left side of the electrode protection layer 34 disconnects from the first transparent electrode 22a, and the right side of the electrode protection layer 34 disconnects from the transparent conductive layer 35.

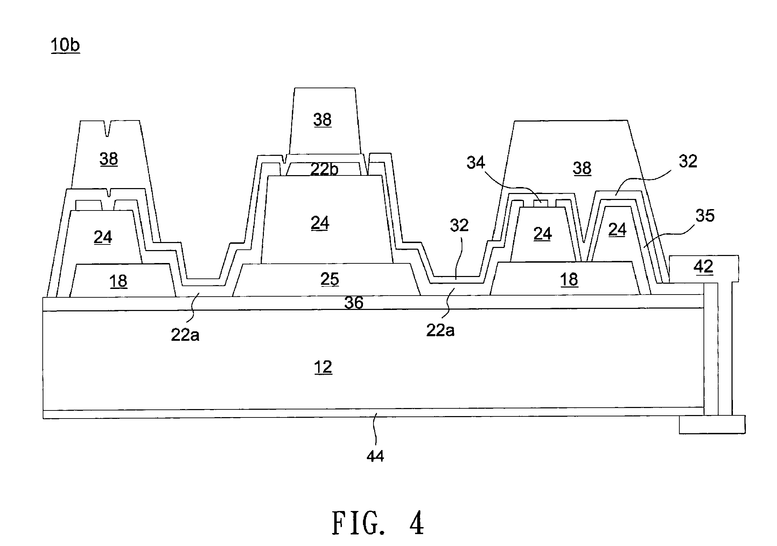

FIG. 4 shows a schematic diagram of a touch-sensitive device according to another embodiment of the invention. Referring to FIG. 4, the decorative layer 16 is omitted from a touch-sensitive device 10b, a bottom insulation layer 36 is formed on the transparent substrate 12 and covers the touch-sensing structure 14, and the touch-sensing structure 14 and the trace layer 18 are formed on the bottom insulation layer 36. Further, a top insulation layer 38 is disposed on the passivation layer 32, the electrode protection layer 34 and the dielectric layer 24, and the top insulation layer 38 substantially overlaps the trace layer 18 and part of the transparent electrodes 22a and 22b to provide moisture isolation, protect metal traces, and avoid side scrapes. Besides, a shielding layer 44 may be formed on one side of the transparent substrate 12 opposite the trace layer 18 to prevent the touch-sensitive device 10b from being interfered by external electro-magnetic interference.

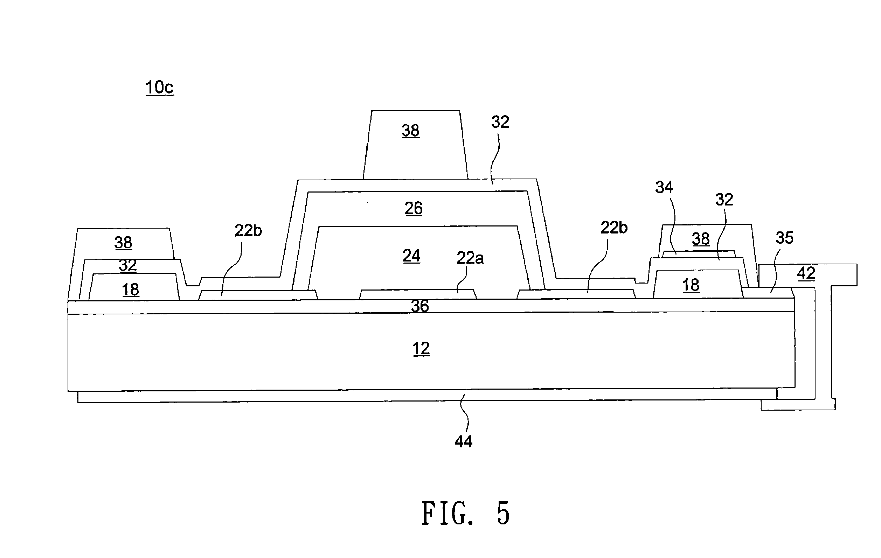

The touch-sensing structure 14 according to the above embodiments is not limited to specific configuration as long as the effect of touch-sensing is achieved, and FIG. 3 and FIG. 4 merely illustrate an example of a underground electrode structure where first connecting lines 25 are adjacent to the bottom insulation layer 36 or the transparent substrate 12. In an alternate embodiment, connecting lines are connected with each other beyond the touch-sensing structure 14 to form a bridge electrode structure. As shown in FIG. 5, second connecting lines 26 of the touch-sensitive device 10c are disposed on the dielectric layer 24, and two different second transparent electrodes 22 are connected with each other by a top second connecting line 26 to form a bridge electrode structure. Note the position of the electrode protection layer 34 on the transparent substrate 12 is not restricted. The electrode protection layer 34 only needs to be formed beyond the trace layer 18 and spaced apart from the trace layer 18 by a medium layer, and the medium layer is used to serve dielectric effects and not limited to a specific material. Referring to FIG. 5 again, the electrode protection layer 34 may be formed on the passivation layer 32 and substantially overlaps the trace layer 18 to provide similar protection effects, and two ends of the transparent conductive layer 35 are respectively connected with the trace layer 18 and the flexible circuit board 42.

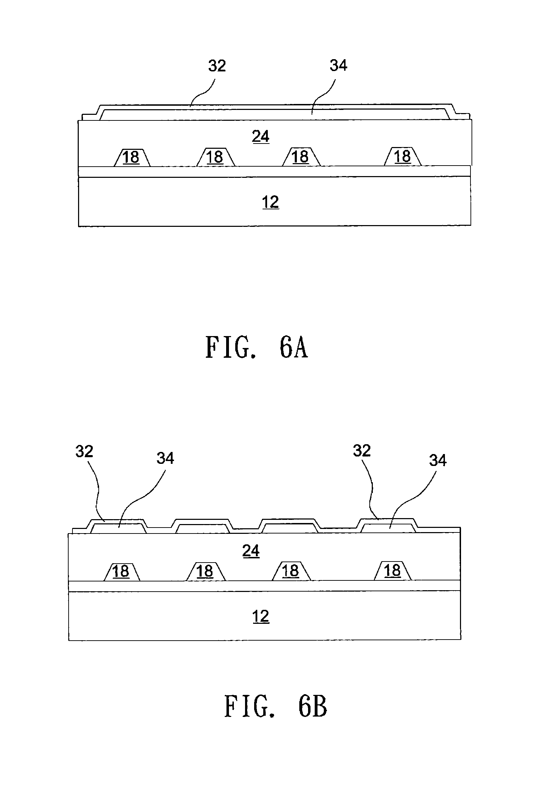

Note the touch-sensing structure 14 is not limited to be formed on the same side of the transparent substrate 12. For example, multiple first sensing series 11 and multiple second sensing serious 13 may be respectively disposed on two opposite sides of the transparent substrate 12 to form a double-sided ITO (DITO) electrode structure. Further, the distribution of the electrode protection layer 34 is not restricted. For example, the electrode protection layer 34 may be provided on the transparent substrate 12 in the form of an entire plane (FIG. 6A) or isolated blocks (FIG. 6B). Particularly, the electrode protection layer 34 provided in the form of isolated blocks may further reduce undesired capacitance-coupling effects.

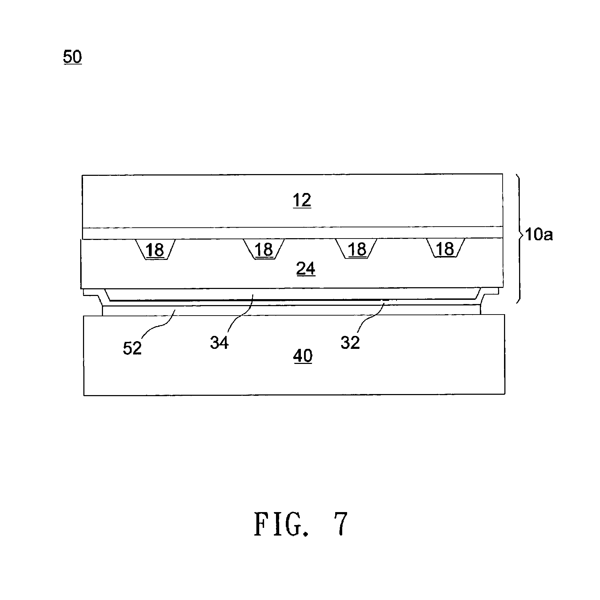

The touch-sensitive device according to the above embodiments may combine with a display device to form a touch-sensitive display device. For example, as shown in FIG. 7, a display device 40 may be attached to a touch-sensitive device 10a through an optical adhesive 52 to form a touch-sensitive display device 50. The type of the display device 40 may be, but is not limited to, a liquid crystal display, an organic light-emitting diode display, an electro-wetting display, a bi-stable display, or an electrophoretic display.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the present disclosure is intended to be dedicated to the public regardless of whether the element or component is explicitly recited in the following claims. Each of the terms "first" and "second" is only a nomenclature used to modify its corresponding element. These terms are not used to set up the upper limit or lower limit of the number of elements.

## Claims

1. A touch-sensitive device, comprising:
a transparent substrate;
a touch-sensing structure disposed on the transparent substrate;
a trace layer disposed on the transparent substrate and connected with the touch-sensing structure;
a medium layer disposed on the transparent substrate and substantially covering the trace layer; and
an electrode protection layer disposed on the medium layer and overlapping at least part of the trace layer.

2. The touch-sensitive device as claimed in claim 1, wherein the touch-sensing structure comprises a plurality of first sensing series and a plurality of second sensing series, the medium layer is a dielectric layer, and the first sensing series and the second sensing series are spaced apart from each other by the dielectric layer.

3. The touch-sensitive device as claimed in claim 2, further comprising:
a top insulation layer being disposed on the electrode protection layer and the dielectric layer and substantially overlapping at least part of the touch-sensing structure and the trace layer.

4. The touch-sensitive device as claimed in claim 2, wherein the dielectric layer has an opening formed on the trace layer to expose part of the trace layer.

5. The touch-sensitive device as claimed in claim 1, wherein the medium layer is a passivation layer covering the touch-sensing structure.

6. The touch-sensitive device as claimed in claim 5, further comprising:
a top insulation layer being disposed on the electrode protection layer and the passivation layer and substantially overlapping at least part of the touch-sensing structure and the trace layer.

7. The touch-sensitive device as claimed in claim 1, further comprising:
a decorative layer disposed on the transparent substrate, wherein the trace layer is disposed on the decorative layer.

8. The touch-sensitive device as claimed in claim 7, wherein the decorative layer comprises at least one of diamond-like carbon, ceramic, colored ink, resin and photo resist.

9. The touch-sensitive device as claimed in claim 1, further comprising:
a bottom insulation layer formed on the transparent substrate, wherein the touch-sensing structure and the trace layer are formed on the bottom insulation layer.

10. The touch-sensitive device as claimed in claim 1, further comprising:
a transparent conductive layer formed on the transparent substrate and electrically connected with a trace layer and an external circuit.

11. The touch-sensitive device as claimed in claim 1, further comprising:
a shielding layer formed on one side of the transparent substrate opposite the trace layer.

12. The touch-sensitive device as claimed in claim 1, wherein each of the first sensing series comprises a plurality of first transparent electrodes and first connecting lines, each of the second sensing series comprises a plurality of second transparent electrodes and second connecting lines, the first transparent electrodes are connected with each other by the first connecting lines, and the second transparent electrodes are connected with each other by the second connecting lines.

13. The touch-sensitive device as claimed in claim 12, wherein the electrode protection layer is not connected with the first sensing series and the second sensing series.

14. The touch-sensitive device as claimed in claim 12, wherein the electrode protection layer, the first transparent electrodes and the second transparent electrodes are formed in the same fabrication process with an identical material.

15. A touch-sensitive display device, comprising:
a touch-sensitive device having a touch screen area and a non-screen area and comprising:
a transparent substrate;
a touch-sensing structure disposed on one side of the transparent substrate and at least provided substantially in the touch screen area;
a trace layer disposed on the transparent substrate and connected with the touch-sensing structure;
a medium layer disposed on the transparent substrate and substantially covering the trace layer; and
an electrode protection layer disposed on the medium layer and overlapping at least part of the trace layer; and
a display device attached to the touch-sensitive device.

16. The touch-sensitive display device as claimed in claim 15, wherein the display device is a liquid crystal display, an organic light-emitting diode display, an electro-wetting display, a bi-stable display, or an electrophoretic display.
